# EUROPEAN PATENT APPLICATION

(11) **EP 1 802 107 A1**
(43) Date of publication of application: **27.06.2007**
(21) Application number: 05790259.5
(22) Date of filing: 07.10.2005
(51) Int. Cl.: H04N 5/44, H04N 7/173

(54) **BROADCAST RECEIVING APPARATUS**

(30) Priority: 08.10.2004 JP 2004296319
(71) Applicant: MATSUSHITA ELECTRIC INDUSTRIAL CO., LTD., Osaka 571-8501 (JP)
(72) Inventor: NISHI, Tatsuya, c/o Mats. El. Ind. Co., IPROC, IP Dev Ct, Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2005/018654
(87) International publication number: WO 2006/041039

(57) **Abstract**

A broadcast receiving apparatus capable of automatically switching channel lists without increasing the apparatus scale nor increasing the power consumption. In this apparatus, a received channel list storing part (106) stores a plurality of channel lists corresponding to a plurality of different broadcast areas, and a switched station selection control part (121) uses a currently set first channel list of the plurality of channel lists to select a station. If this station selection is failed, then the switched station selection control part (121) switches the currently set channel list to a second channel list and uses the second channel list channels to perform a station selection.

## Description

### Technical Field

The present invention relates to a broadcast receiving apparatus installed in a portable terminal.

### Background Art

Portable terminals such as mobile phones enabling TV viewing are becoming increasingly popular, and if a user can receive TV waves while moving, or at the user's destination, it is possible to view TV without restrictions as to location.

In television, a list called a channel list that corresponds to a broadcast area is generally created by means of a channel search, or provided beforehand, and this channel list contains channels that can be received in a particular area together with associated numbers specifying the channels.

In the case of a portable terminal that allows viewing of such TVbroadcasting, TVviewing is not possible if the terminal moves beyond a broadcast area since the terminal does not have a channel list corresponding to the broadcast area to which the terminal moves.

Thus, the invention disclosed in Patent Document 1 was devised. FIG.1 is block diagram showing the configuration of a broadcast receiving apparatus described in Patent Document 1. In this drawing, by continuing viewing using a first receiving apparatus 30 that receives terrestrial digital TV broadcasting while performing a channel search using a second receiving apparatus 31 that receives terrestrial digital radio broadcasting, a channel list for the present point in time is created, and when the broadcast area changes, the created channel list is changed to, and TV broadcasting can be viewed.
Patent Document 1: Japanese Patent Application Laid-Open No.2004-64590

### Disclosure of Invention

### Problems to be Solved by the Invention

However, since the broadcast receiving apparatus described in above Patent Document 1 is equipped with two receiving apparatuses, the apparatus scale and power consumption are increased.

It is an object of the present invention to provide a broadcast receiving apparatus that performs channel list switching without increasing the apparatus scale and power consumption.

### Means for Solving the Problems

A broadcast receiving apparatus of the present invention employs a configuration that includes: a storage section that stores a plurality of channel lists corresponding to a plurality of different broadcast areas; and a switchover channel selection control section that, if channel selection fails using a currently usable first channel list among a plurality of channel lists stored in the storage section, switches a currently usable channel list to another second channel list, and performs channel selection with a frequency channel of the second channel list.

### Advantageous Effect of the Invention

According to the present invention, a broadcast receiving apparatus can be provided that changes a channel list without increasing the apparatus scale and power consumption.

### Brief Description of Drawings

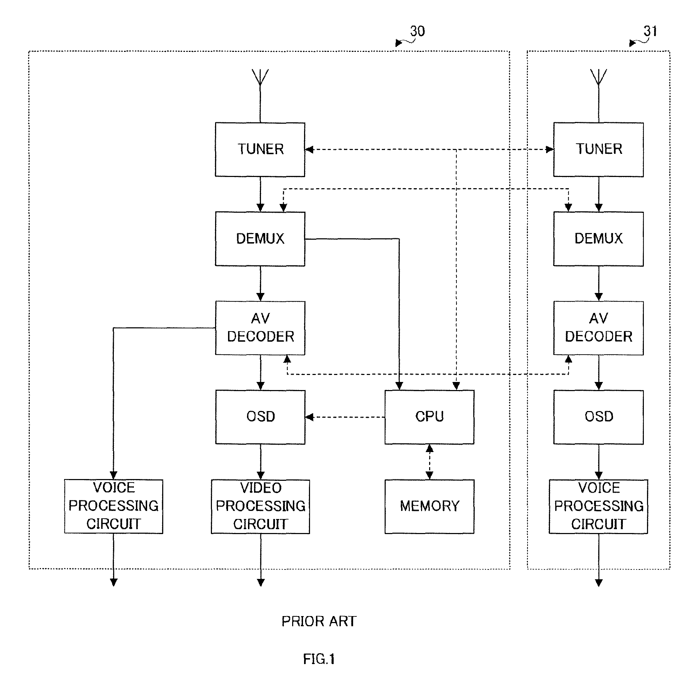

FIG.1 is a block diagram showing the configuration of a broadcast receiving apparatus described in Patent Document 1;
FIG.2 is a block diagram showing the configuration of a digital broadcast receiving apparatus according to Embodiments 1, 2, and 3 of the present invention;
FIG.3 is a drawing showing channel lists held by the receive channel list storage section shown in FIG.2;
FIG.4 is a block diagram showing the internal configuration of the control section shown in FIG.2;
FIG. 5 is a flowchart showing the procedure of switchover channel selection processing of the digital broadcast receiving apparatus shown in FIG.2;
FIG.6 is a flowchart showing the detailed procedure of the channel list determination processing shown in FIG.5;
FIG. 7 is a flowchart showing the procedure of startup processing of a broadcast receiving apparatus according to Embodiment 2 of the present invention; and
FIG.8 is a flowchart showing the procedure of abnormal reception avoidance processing during TV playback of a broadcast receiving apparatus according to Embodiment 3 of the present invention.

### Best Mode for Carrying Out the Invention

Embodiments of the present invention will now be described in detail with reference to the accompanying drawings.

### (Embodiment 1)

In Embodiment 1 of the present invention, a digital broadcast receiving apparatus is taken as an example. First, a brief outline of terrestrial digital broadcasting will be given. In terrestrial digital broadcasting, it is planned to provide a data broadcasting service by allocating one of 13 divisions of a channel band (6 MHz) (one segment). This data broadcasting service is called partial reception broadcasting. The amount of information transmitted in one segment is extremely small, and program information and so forth for only ten programs at the most can be included. PSI (Program Specific Information) and SI (Service Information) are known as program information. PSI is information necessary for selecting a desired program, while SI comprises various kinds of stipulated information for making program selection more convenient, including EPG (Electronic Program Guide) related information such as program names, broadcasting station names, and so forth.

Also, in terrestrial digital broadcasting, when a broadcasting station multiplexes a plurality of data comprising video, voice, and other program information into a single stream, the MPEG protocol MPEG-2 TS (Transport Stream) is used, the multiplexed stream is demultiplexed on the receiving side, and the data prior to multiplexing is obtained. When "TS" alone is referred to below in this Description, this means all partial reception broadcasting data sent by a broadcasting station.

As a plurality of data can be multiplexed in digital broadcasting in this way, unlike analog broadcasting, a plurality of channels can be operated in one frequency band. To avoid confusion and erroneous use, the concept of a channel as used in this Description will be defined here. Channels include physical channels and logical channels, with physical channels also being used in analog broadcasting. A physical channel is a physical frequency assignment channel (hereinafter referred to as "frequency channel"). In terrestrial digital broadcasting, frequency channels from ch13 to ch62 are assigned. A logical channel identifies a plurality of program schemes (hereinafter referred to as "services") within a frequency channel, and is called a service channel and is identified by means of a service ID. Such frequency channels and service channels are referred to as channels generically.

The above-described frequency channels are assigned one-touch button numbers on a remote controller or the like for easy identification, these numbers being called remote controller numbers. When channel selection (station selection, tuning) is performed by means of a remote controller number, a main service called "primary service" is selected from among a plurality of service channels included in one frequency channel. A number that is calculated from this remote controller number and the service channel value, whereby a user directly specifies a service within a frequency channel, is called a 3-digit number.

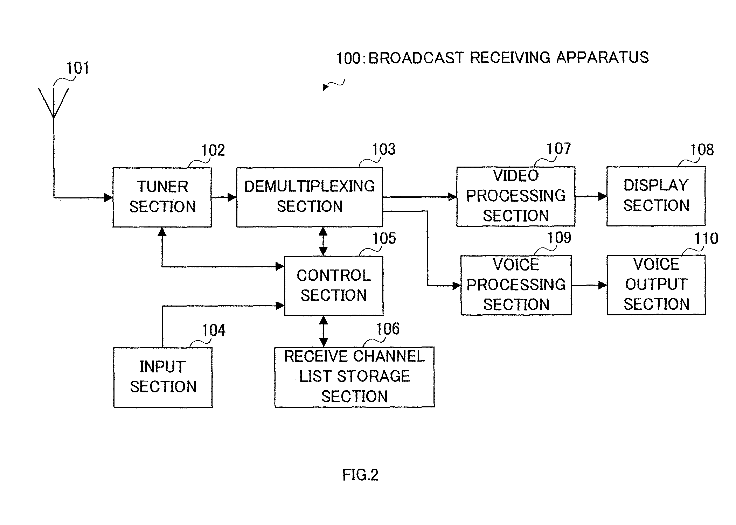

FIG.2 is a block diagram showing the configuration of a digital broadcast receiving apparatus 100 according to Embodiment 1 of the present invention. In this drawing, a tuner section 102 extracts a frequency signal of a channel specified by a user from a broadcast wave received via an antenna 101, and performs code demodulation processing on the extracted frequency signal. A signal that has undergone demodulation processing is output to a demultiplexing section 103 and a control section 105.

Demultiplexing section 103 separates the signal output from tuner section 102 into video, voice, and program information, and so forth, and outputs the separated information to control section 105.

An input section 104 comprises button keys, a camera, a microphone, and so forth, by means of which the user inputs a desired remote controller number or 3-digit number to control section 105.

Control section 105 performs TV playback, channel selection, and so forth by controlling the various sections inside digital broadcast receiving apparatus 100. Details of control section 105 will be given later herein.

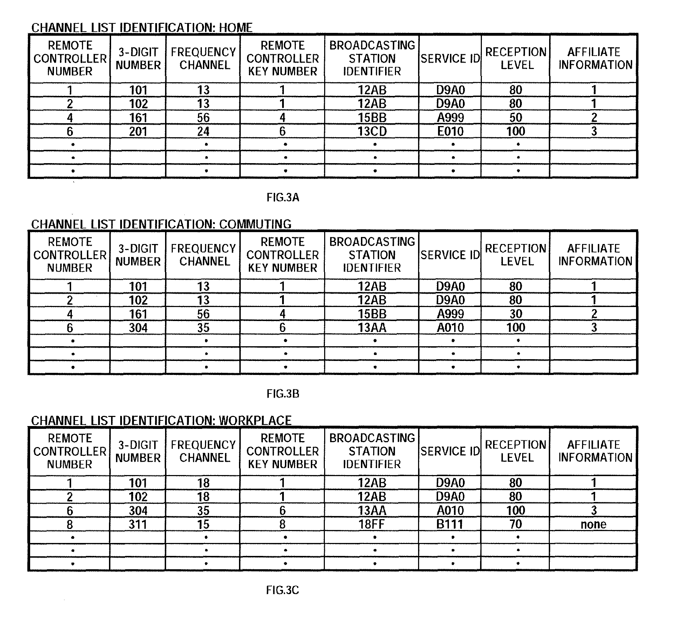

A receive channel list storage section 106 is nonvolatile memory that detects a receivable broadcast wave, and by means of a channel search coordinated with remote controller numbers, stores information on broadcasting stations that can be received at the time of the search as a receive channel list. As shown in FIG. 3, receive channel list storage section 106 has a plurality of channel lists for different broadcast areas, and items listed in each channel list include remote controller number, 3-digit number, frequency channel, remote controller key number, broadcasting station identifier, service ID, reception level, and affiliate information. FIG.3A shows a channel list corresponding to a broadcast area that includes the user's home, FIG.3B shows a channel list corresponding to a broadcast area that includes the user's commuting route, and FIG.3C shows a channel list corresponding to a broadcast area that includes the user's workplace. In this way, home, commuting, workplace, and suchlike channel list identification information is provided in each channel list.

A video processing section 107 decodes a video stream coded by means of H.264 or the like, output from demultiplexing section 103, and outputs the decoded signal to a display section 108. Display section 108 displays an image output from video processing section 107.

A voice processing section 109 decodes a voice stream coded by means of AAC or the like, output from demultiplexing section 103, and outputs the decoded signal to a voice output section 110. Voice output section 110 outputs a signal output from voice processing section 109 as voice.

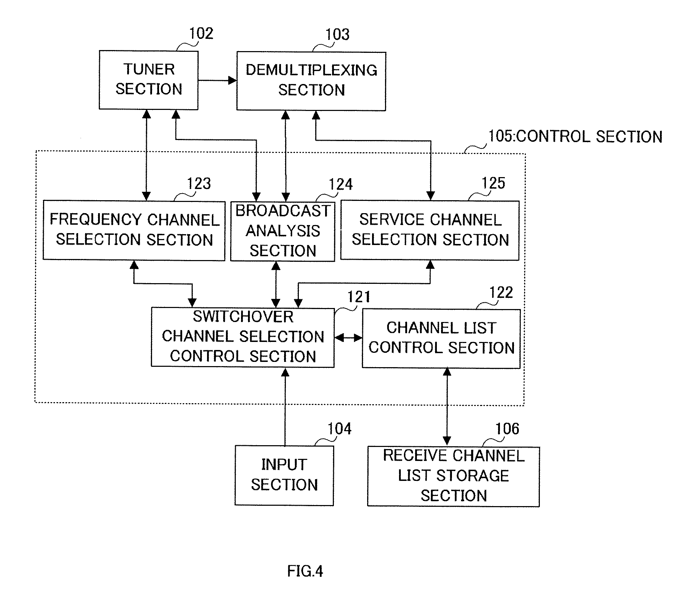

The internal configuration of above control section 105 will now be described using FIG.4. In this figure, when a remote controller number or 3-digit number is input from input section 104, a switchover channel selection control section 121 starts switchover channel selection by controlling a channel list control section 122, frequency channel selection section 123, broadcast analysis section 124, and service channel selection section 125. Switchover channel selection is also started if an abnormality such as an area becoming out of service area occurs. If there is no receivable channel despite searching all the channel lists stored in receive channel list storage section 106, a channel search is started.

Channel list control section 122 performs read control and write control for receive channel list storage section 106. For example, channel list control section 122 changes the (currently used) channel list set as current among the plurality of channel lists stored in receive channel list storage section 106, manages the order for setting as current preferentially (priority order), and performs channel list updating.

Frequency channel selection section 123 receives a directive from switchover channel selection control section 121 and sets a frequency channel in tuner section 102, and if there is a receivable broadcast wave (TS) in the set frequency channel, determines frequency channel selection to have succeeded, and outputs the TS directly from tuner section 102 to demultiplexing section 103. If there is no receivable broadcast wave (TS), frequency channel selection is determined to have failed, and this fact is reported to switchover channel selection control section 121.

Broadcast analysis section 124 receives a directive from switchover channel selection control section 121, and performs demultiplexing section 103 setting and analysis of data separated by demultiplexing section 103. The broadcasting station information, TS service configuration, and so forth, obtained through this analysis are reported to switchover channel selection control section 121. Broadcast analysis section 124 also monitors the status of tuner section 102, and if digital broadcast receiving apparatus 100 moves out of service area, reports this fact to switchover channel selection control section 121.

Service channel selection section 125 receives a directive from switchover channel selection control section 121, sets demultiplexing section 103 so as to extract video, voice, and suchlike streams of the specified service within the TS, and also makes a setting for the extracted streams to be output to video processing section 107 and voice processing section 109.

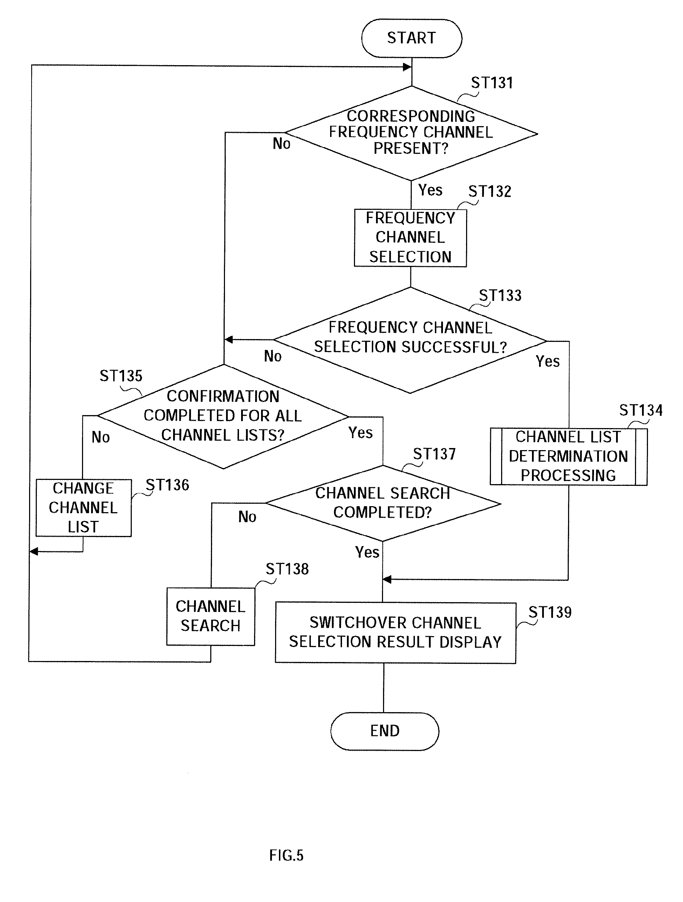

The switchover channel selection processing procedure of digital broadcast receiving apparatus 100 with the above configuration will now be described using FIG.5. Referring to FIG.5, in step (hereinafter abbreviated to "ST") 131 switchover channel selection control section 121 checks whether a frequency channel corresponding to a remote controller number or 3-digit number input from input section 104 is currently set, and also checks whether such a frequency channel is present in a channel list stored in receive channel list storage section 106 via channel list control section 122. If, as a result, it is confirmed that such a frequency channel is currently set or is present in a channel list stored in receive channel list storage section 106 (YES) the processing flow proceeds to ST132, and if it is confirmed that such a frequency channel is not currently set and is not present in a channel list (NO) the processing flow proceeds to ST135.

In ST132 switchover channel selection control section 121 sets tuner section 102 to the frequency channel corresponding to the remote controller number or 3-digit number input from input section 104 by controlling frequency channel selection section 123, and tries broadcast wave (TS) reception.

In ST133 it is determined by frequency channel selection section 123 whether or not the frequency channel selection in ST132 was successful. If the frequency channel selection is determined to have succeeded (YES) the processing flow proceeds to ST134, and if the frequency channel selection is determined to have failed (NO) the processing flow proceeds to ST135.

In ST134 the broadcast wave (TS) obtained by frequency channel selection in ST132 is analyzed, broadcasting station determination and a channel list setting change are performed, and the processing flow proceeds to ST139. The procedure in ST134 will be described in detail later herein.

In ST135 it is determined by switchover channel selection control section 121 whether or not frequency channel selection has been performed for all the channel lists stored in receive channel list storage section 106. If it is determined that frequency channel selection has not been performed (NO) the processing flow proceeds to ST136, and if it is determined that frequency channel selection has been performed (YES) the processing flow proceeds to ST137.

In ST136 channel list control section 122 changes the channel list set as current to the next priority channel list, and the processing flow returns to ST131. By assigning priorities to channel lists and switching channel lists in accordance with the channel list priority order in this way, the possibility of channel selection succeeding with the next channel list can be improved.

In ST137 it is determined by switchover channel selection control section 121 whether or not a channel search has already been performed. If it is determined that a channel search has not been performed (NO) the processing flow proceeds to ST138, and if it is determined that a channel search has been performed (YES) the processing flow proceeds to ST139.

In ST138 switchover channel selection control section 121 performs a channel search, detects channels that can be received at the present time and creates a new channel list, and proceeds to ST131. By performing a channel search only when channel selection has failed using all the channel lists stored in receive channel list storage section 106 in this way, the frequency with which channel searches are performed can be kept low. When performing a channel search, the channel search can be performed at high speed by excluding channels of a channel list for which channel selection has failed from the search.

In ST139 switchover channel selection results such as channel list identification information are displayed on display section 108, and switchover channel selection processing is terminated.

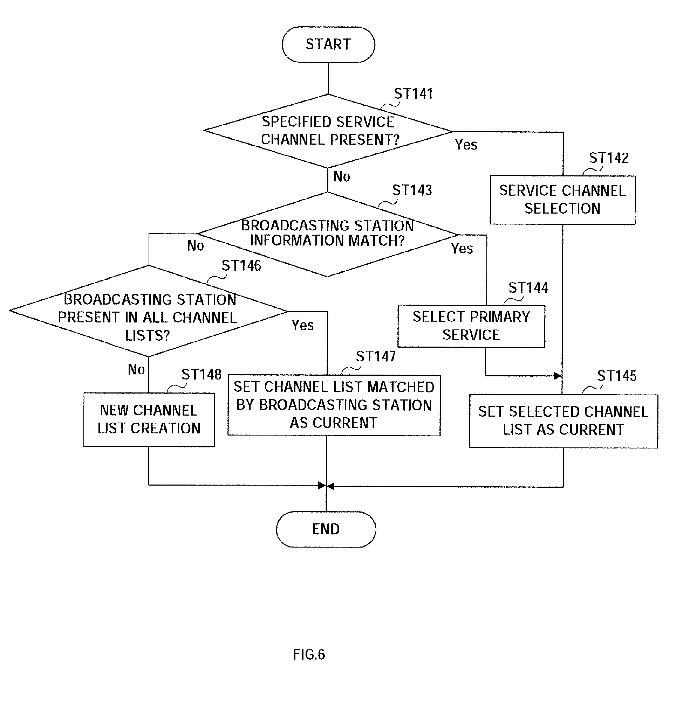

The detailed procedure of the channel list determination processing in ST134 shown in FIG. 5 will now be described using FIG.6. In ST141 in FIG.6 the success of frequency channel selection in ST132 in FIG.5 is identified, and the PSI/SI section contained in the frequency channel broadcast wave (TS) is analyzed by broadcast analysis section 124. Specifically, the service list descriptor of the NIT (Network Information Table) containing the TS service configuration, partial reception descriptor of the NIT containing the partial service ID (service channel) in the TS, PMT (Program Map Table) containing the configuration of one service, and so forth, are analyzed. By this means, it is determined whether or not a service channel corresponding to a 3-digit number input from input section 104 is included in the TS. If it is determined that the service channel is included (YES) the processing flow proceeds to ST142, and if it is determined that the service channel is not included (NO) the processing flow proceeds to ST143.

In ST142, a service channel corresponding to the 3-digit number input from input section 104 is selected, and service channel selection section 125 sets demultiplexing section 103 so that video provided by the specified service in the TS is output to video processing section 107, and voice to voice processing section 109, and the processing flow proceeds to ST145.

In ST143 it is determined by switchover channel selection control section 121 whether or not broadcasting station information corresponding to the selected frequency channel, and broadcasting station information of section data contained in the broadcast wave of the selected channel (hereinafter referred to simply as "received broadcasting station information"), match in a channel list stored in receive channel list storage section 106. Specifically, broadcasting station identification information contained in a BIT (Broadcaster Information Table), network identification information contained in each PSI/SI, TS identification information, and so forth, are analyzed. If it is determined that there is a match (YES) the processing flow proceeds to ST144, and if it is determined that there is no match (NO) the processing flow proceeds to ST146.

In ST144 service channel selection section 125 selects a primary service channel, sets demultiplexing section 103 so that video provided by the primary service in the TS is output to video processing section 107, and voice to voice processing section 109, and proceeds to ST145.

In ST145, if the channel list containing the selected service channel has not been set as current, channel list control section 122 sets that channel list as current, and terminates channel list determination processing. Instead of setting that channel list as current, its prioritymaybe raised (to the first priority, for example). By this means, the convenience of a channel list corresponding to the broadcast area in which a user is located can be improved.

In ST146 switchover channel selection control section 121 searches all channel lists stored in receive channel list storage section 106 via channel list control section 122, and determines whether or not broadcasting station information matching the received broadcasting station information is present. If it is determined that such information is present (YES) the processing flow proceeds to ST147, and if it is determined that such information is not present (NO) the processing flow proceeds to ST148.

In ST147 channel list control section 122 sets the channel list containing broadcasting station information that matches the received broadcasting station information as current, and terminates channel list determination processing. If a plurality of items of broadcasting station information match the received broadcasting station information, the highest-priority channel list is set as current.

In ST148 switchover channel selection control section 121 indicates on display section 108 the fact that this is a broadcast area different from broadcast areas corresponding to the plurality of channel lists stored in receive channel list storage section 106, and requests the user to create a new channel list. Alternatively, switchover channel selection control section 121 creates a new channel list and enters therein the selected channel as a receivable channel. If a channel search has already been performed during switchover channel selection, switchover channel selection control section 121 makes the search results a new channel list. Then switchover channel selection control section 121 terminates channel list determination processing.

Thus, according to Embodiment 1, a plurality of channel lists corresponding to a plurality of different broadcast areas are provided in advance in a broadcast receiving apparatus, and when the broadcast receiving apparatus moves beyond a broadcast area, channel selection is performed after automatically switching the previously provided plurality of channel lists, thereby enabling a user to be saved the trouble of performing channel selection after switching channel lists. Also, since channel lists provided in advance are used in channel list switching, an increase in apparatus scale and power consumption can be prevented.

### (Embodiment 2)

In Embodiment 1, processing when a broadcast receiving apparatus moves beyond a broadcast area after being started up was described. In Embodiment 2 of the present invention, processing when a broadcast receiving apparatus is started up will be described. The configuration of a digital broadcast receiving apparatus according to this embodiment is the same as in FIG.2 and FIG.3, and therefore FIG.2 and FIG.3 will be referred to in the description.

Each time broadcasting station determination and a channel list setting change are performed in channel list determination processing (corresponding to ST134 in FIG.5), receive channel list storage section 106 shown in FIG.2 and FIG.3 stores a corresponding remote controller number together with current channel list identification information as a last channel list. Here, a remote controller number is cited as an example, but a 3-digit number or service ID may also be used, or any information capable of indicating a channel may be used.

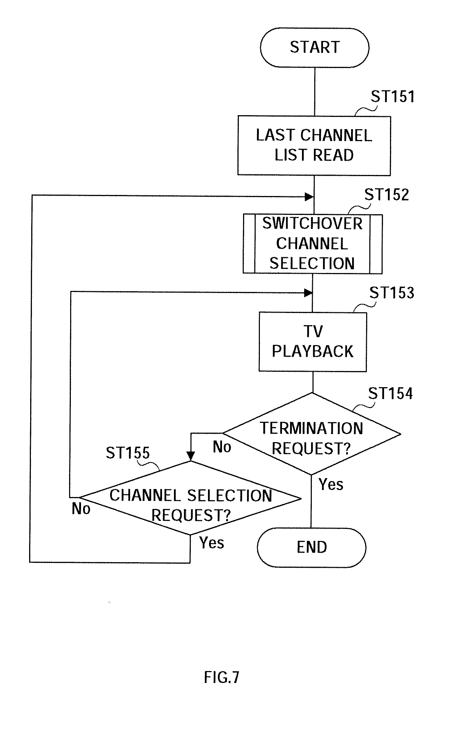

The startup processing procedure of a broadcast receiving apparatus will now be described using FIG.7. In ST151 in FIG.7, channel list control section 122 reads the last channel list stored in receive channel list storage section 106, and further reads a frequency channel corresponding to a read channel number. Then switchover channel selection control section 121 performs channel selection for that frequency channel. By this means, when a broadcast receiving apparatus is started up, the channel for which TV playback was being performed at the time of the most recent broadcast receiving apparatus termination can be started up. Processing for a case in which channel selection cannot be performed with a channel number stored in the last channel list - for example, when the broadcast area is different at the time of broadcast receiving apparatus startup and most recent termination - is described in ST152 onward.

In ST152 the switchover channel selection processing shown in FIG. 5 is performed, and in ST153 TV playback is performed with the channel selected by the switchover channel selection processing.

In ST154 it is determined whether or not there is a broadcast receiving apparatus termination request by the user or the like. If it is determined that there is a termination request (YES) the broadcast receiving apparatus is terminated, and if it is determined that there is no termination request (NO) the processing flow proceeds to ST155.

In ST155 it is determined whether or not there is a channel selection request by the user or the like. If it is determined that there is a channel selection request (YES) the processing flow returns to ST152, and if it is determined that there is no channel selection request (NO) the processing flow returns to ST153.

Thus, according to Embodiment 2, by performing channel selection with a channel number stored in the last channel list when a broadcast receiving apparatus is started up, TV playback can be performed with the channel selected at the time of the most recent termination, together with broadcast receiving apparatus startup.

### (Embodiment 3)

In Embodiment 3 of the present invention, a case in which broadcast wave reception ceases to be possible during TV playback will be described. The configuration of a digital broadcast receiving apparatus according to this embodiment is the same as in FIG.2 and FIG.3, and therefore FIG.2 and FIG.3 will be referred to in the description.

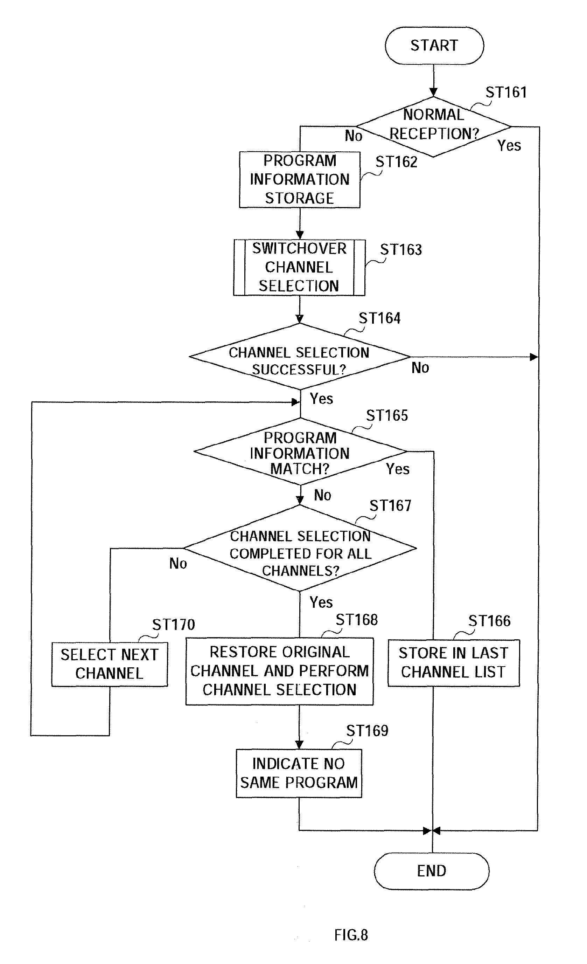

FIG.8 is a flowchart showing the procedure of abnormal reception avoidance processing during TV playback of a broadcast receiving apparatus according to Embodiment 3 of the present invention. In ST161 in FIG.8, it is determined whether a broadcast wave is being received normally and video and voice are being played back. If it is determined that a broadcast wave is being received normally (YES) abnormal reception avoidance processing is terminated. On the other hand, if it is determined that a broadcast wave is not being received normally, such as when the reception state is poor, video or voice underflow has occurred, or playback has stopped - in other words, if reception is determined to be abnormal - (NO) the processing flow proceeds to ST162.

In ST162 information on the program for which TV playback was being performed - for example, program identification information, program name, genre, or the like - and affiliate information indicating an affiliate of the broadcasting station that broadcasts the channel on which TV playback was being performed are stored.

In ST163 the switchover channel selection processing shown in FIG.5 is performed, and in ST164 it is determined whether or not switchover channel selection was successful. If it is determined that switchover channel selection was successful (YES) the processing flow proceeds to ST165, and if it is determined that switchover channel selection failed (NO) abnormal reception avoidance processing is terminated.

In ST165 it is determined whether or not program information or affiliate information stored in ST163 is included in the channel selected in ST162. If it is determined that this information is included (YES) the processing flowproceeds to ST166, and if it is determined that this information is not included (NO) the processing flow proceeds to ST167.

In ST166 the corresponding remote controller number is stored in the last channel list together with current channel list identification information, and abnormal reception avoidance processing is terminated.

In ST167 it is determined whether or not channel selection has been performed for all channels in the current channel list. If it is determined that channel selection has been performed for all channels (YES) the processing flow proceeds to ST168, and if it is determined that channel selection has not been performed for all channels (NO) the processing flow proceeds to ST170.

In ST168, since program information or affiliate information stored in ST162 was not included in a selected channel even though channel selection has been performed for all the channels in the current channel list, the channel for which abnormal reception was determined in ST161 is returned to, and channel selection is performed. Then, in ST169, the absence of the same program or the same affiliate is indicated, and abnormal reception avoidance processing is terminated.

In ST170 channel selection is performed with the next frequency channel in the current channel list, and the processing flow returns to ST165.

Thus, according to Embodiment 3, if a broadcast wave is received abnormally during TV playback, switchover channel selection processing is performed, and if there is a channel that includes program information or affiliate information that matches the channel for which abnormal reception was determined among the selected channel, channel selection is performed for that channel, thereby enabling a broadcast receiving apparatus that moves beyond a broadcast area during TV playback to continue TV playback of the same program in the destination broadcast area.

In the above embodiments digital broadcasting has been taken as an example, but the present invention is not limited to this, and may also be applied to analog broadcasting.

Also, in the above embodiments the description has referred to a broadcast receiving apparatus that can be installed in a portable terminal or the like, but the present invention is not limited to this, and may also be a broadcast receiving apparatus that can be installed in a vehicle or the like.

A first aspect of the present invention is a broadcast receiving apparatus that includes: a storage section that stores a plurality of channel lists corresponding to a plurality of different broadcast areas; and a switchover channel selection control section that, if channel selection fails using a currently usable first channel list among a plurality of channel lists stored in the storage section, switches a currently usable channel list to another second channel list, and performs channel selection with a frequency channel of the second channel list.

According to this configuration, if channel selection fails using a currently usable first channel list, channel selection is performed after switching the currently usable channel list to another second channel list, thereby enabling a user to be saved the trouble of performing channel selection after switching channel lists.

A second aspect of the present invention is a broadcast receiving apparatus wherein, in the above aspect, the switchover channel selection control section, when performing channel selection for a broadcast wave sent by means of digital broadcasting, performs channel selection of a frequency channel for which input information specifying a channel matches a service channel of the second channel list.

According to this configuration, when the same service is being broadcast by another frequency channel, the same service can be selected.

A third aspect of the present invention is a broadcast receiving apparatus wherein, in an above aspect, the switchover channel selection control section switches a currently usable channel list in accordance with the priority order of the plurality of channel lists to which priorities have been assigned.

According to this configuration, since a currently usable channel list is switched in accordance with a channel list priority order, by assigning a high priority to a channel list corresponding to a broadcast area in which a user is frequently located, the possibility of achieving channel selection using the second channel list switched to when channel selection fails can be improved.

A fourth aspect of the present invention is a broadcast receiving apparatus wherein, in an above aspect, the switchover channel selection control section sets a channel list for which channel selection has succeeded as a currently usable channel list.

A fifth aspect of the present invention is a broadcast receiving apparatus wherein, in an above aspect, the switchover channel selection control section raises the priority of switching control of a channel list for which channel selection has succeeded.

According to these configurations, by setting a channel list for which channel selection has succeeded as a currently usable channel list, or raising the priority of a channel list for which channel selection has succeeded, the convenience of a channel list corresponding to the broadcast area in which a user is located can be improved.

A sixth aspect of the present invention is a broadcast receiving apparatus wherein, in an above aspect, the switchover channel selection control section performs channel selection after switching to the second channel list if input information specifying a channel is not present in the first channel list.

According to this configuration, performing channel selection after switching to a second channel list if input information specifying a channel is not present in a first channel list enables a user to be saved the trouble of performing channel selection after switching channel lists.

A seventh aspect of the present invention is a broadcast receiving apparatus wherein, in an above aspect, the switchover channel selection control section performs a channel search if channel selection has failed using all channel lists stored in the storage section.

According to this configuration, channel list creation and setting can be performed automatically even if a user moves to a broadcast area that has not been set by the user.

An eighth aspect of the present invention is a broadcast receiving apparatus wherein, in an above aspect, the switchover channel selection control section, when performing a channel search, excludes channels of a channel list for which channel selection has failed from the search.

According to this configuration, a channel search can be performed at high speed by excluding channels of a channel list for which channel selection has failed from the search.

A ninth aspect of the present invention is a broadcast receiving apparatus wherein, in an above aspect, the switchover channel selection control section performs channel selection at the time of startup with a channel selected at the time of the most recent termination.

According to this configuration, channel selection can be performed with the channel selected at the time of the most recent termination, together with broadcast receiving apparatus startup, so that if a user is in the same broadcast area at the time of the most recent termination and at the time of startup, TV playback can be performed with the channel selected at the time of the most recent termination.

A tenth aspect of the present invention is a broadcast receiving apparatus wherein, in an above aspect, the switchover channel selection control section switches the currently usable channel list if unable to perform channel selection at the time of startup with a channel selected at the time of the most recent termination.

According to this configuration, if channel selection cannot be performed with the channel selected at the time of the most recent termination, together with broadcast receiving apparatus startup, it is likely that the broadcast area in which the user was located at the time of the most recent termination and the broadcast area at the time of startup are different, and therefore switching the currently usable channel list enables the possibility of being able to perform channel selection with a channel list corresponding to the broadcast area at the time of startup to be improved.

An eleventh aspect of the present invention is a broadcast receiving apparatus wherein, in an above aspect, the switchover channel selection control section switches the currently usable channel list if broadcast wave reception ceases to be possible during TV playback.

According to this configuration, if broadcast wave reception ceases to be possible during TV playback, it is likely that the user has moved beyond a broadcast area, and therefore switching the currently usable channel list enables the possibility of being able to perform channel selection with a channel list corresponding to the destination broadcast area to be improved.

A twelfth aspect of the present invention is a broadcast receiving apparatus wherein, in an above aspect, the switchover channel selection control section, when performing channel selection after switching the currently usable channel list to the second channel list, performs channel selection with a channel for which affiliate information indicating the same affiliate as the broadcasting station of the time when broadcast wave reception ceased to be possible during TV playback matches.

According to this configuration, if broadcast wave reception ceases to be possible during TV playback, it is likely that the user has moved beyond a broadcast area, and therefore the possibility of continuing TV playback of the same program in a destination broadcast area can be improved by performing channel selection with a channel that matches affiliate information indicating an affiliate that broadcasts the broadcast wave of the time when broadcast wave reception ceased to be possible during TV playback.

A thirteenth aspect of the present invention is a broadcast receiving apparatus wherein, in an above aspect, the switchover channel selection control section, when performing channel selection after switching the currently usable channel list to the second channel list, performs channel selection with a channel that broadcasts the same program based on program information included in the broadcast wave of the time when broadcast wave reception ceased to be possible during TV playback.

According to this configuration, if broadcast wave reception ceases to be possible during TV playback, it is likely that the user has moved beyond a broadcast area, and therefore the possibility of continuing TV playback of the same program in a destination broadcast area can be improved by performing channel selection with a channel that broadcasts the same program based on program information included in the broadcast wave of the time when broadcast wave reception ceased to be possible during TV playback.

The present application is based on Japanese Patent Application No.2004-296319 filed on October 8, 2004, entire content of which is expressly incorporated herein by reference.

### Industrial Applicability

A broadcast receiving apparatus according to the present invention has an effect of performing channel list switching without increasing the apparatus scale and power consumption, and can be applied to a portable terminal such as a mobile phone or the like, for example.

## Claims

1. A broadcast receiving apparatus comprising:
a storage section that stores a plurality of channel lists corresponding to a plurality of different broadcast areas; and
a switchover channel selection control section that, if channel selection fails using a currently usable first channel list among a plurality of channel lists stored in the storage section, switches a currently usable channel list to another second channel list, and performs channel selection with a frequency channel of the second channel list.

2. The broadcast receiving apparatus according to claim 1, wherein the switchover channel selection control section, when performing channel selection for a broadcast wave sent by means of digital broadcasting, performs channel selection of a frequency channel for which input information specifying a channel matches a service channel of the second channel list.

3. The broadcast receiving apparatus according to claim 1, wherein the switchover channel selection control section switches a currently usable channel list in accordance with a priority order of the plurality of channel lists to which priorities have been assigned.

4. The broadcast receiving apparatus according to claim 1, wherein the switchover channel selection control section sets a channel list for which channel selection has succeeded as a currently usable channel list.

5. The broadcast receiving apparatus according to claim 1, wherein the switchover channel selection control section raises a priority of switching control of a channel list for which channel selection has succeeded.

6. The broadcast receiving apparatus according to claim 1, wherein the switchover channel selection control section performs channel selection after switching to the second channel list if input information specifying a channel is not present in the first channel list.

7. The broadcast receiving apparatus according to claim 1, wherein the switchover channel selection control section performs a channel search if channel selection has failed using all channel lists stored in the storage section.

8. The broadcast receiving apparatus according to claim 7, wherein the switchover channel selection control section, when performing a channel search, excludes a channel of a channel list for which channel selection has failed from a search.

9. The broadcast receiving apparatus according to claim 1, wherein the switchover channel selection control section performs channel selection at a time of startup with a channel selected at a time of a most recent termination.

10. The broadcast receiving apparatus according to claim 9, wherein the switchover channel selection control section switches a currently usable channel list if unable to perform channel selection at a time of startup with a channel selected at a time of a most recent termination.

11. The broadcast receiving apparatus according to claim 1, wherein the switchover channel selection control section switches a currently usable channel list if broadcast wave reception ceases to be possible during TV playback.

12. The broadcast receiving apparatus according to claim 9, wherein the switchover channel selection control section, when performing channel selection after switching a currently usable channel list to the second channel list, performs channel selection with a channel for which affiliate information indicating a same affiliate as a broadcasting station of a time when broadcast wave reception ceased to be possible during TV playback matches.

13. The broadcast receiving apparatus according to claim 9, wherein the switchover channel selection control section, when performing channel selection after switching a currently usable channel list to the second channel list, performs channel selection with a channel that broadcasts a same program based on program information included in the broadcast wave of a time when broadcast wave reception ceased to be possible during TV playback.

## Amended claims

### Amended claims under Art. 19.1 PCT

**1.** A broadcast receiving apparatus comprising:
a storage section that stores a plurality of channel lists corresponding to a plurality of different broadcast areas; and
as witch over channel selection control section that, if channel selection fails using a currently usable first channel list among a plurality of channel lists stored in the storage section, switches a currently usable channel list to another second channel list, and performs channel selection with a frequency channel of the second channel list.

**2.** The broadcast receiving apparatus according to claim 1, wherein the switchover channel selection control section, when performing channel selection for a broadcast wave sent by means of digital broadcasting, performs channel selection of a frequency channel for which input information specifying a channel matches a service channel of the second channel list.

**3.** The broadcast receiving apparatus according to claim 1, wherein the switchover channel selection control section switches a currently usable channel list in accordance with a priority order of the plurality of channel lists to which priorities have been assigned.

**4.** The broadcast receiving apparatus according to claim 1, wherein the switchover channel selection control section sets a channel list for which channel selection has succeeded as a currently usable channel list.

**5.** The broadcast receiving apparatus according to claim 1, wherein the switchover channel selection control section raises a priority of switching control of a channel list for which channel selection has succeeded.

**6.** (Amended) The broadcast receiving apparatus according to claim 1, wherein the switchover channel selection control section, if a channel specified by input information specifying a channel is not in the first channel list, performs channel selection with a frequency channel corresponding to a channel specified by the input information using the second channel list, switches a channel list until frequency channel selection is successful, and switches a channel list for which channel selection was successful as a currently usable channel list.

**7.** The broadcast receiving apparatus according to claim 1, wherein the switchover channel selection control section performs a channel search if channel selection has failed using all channel lists stored in the storage section.

**8.** The broadcast receiving apparatus according to claim 7, wherein the switchover channel selection control section, when performing a channel search, excludes a channel of a channel list for which channel selection has failed from a search.

**9.** The broadcast receiving apparatus according to claim 1, wherein the switchover channel selection control section performs channel selection at a time of startup with a channel selected at a time of a most recent termination.

**10.** The broadcast receiving apparatus according to claim 9, wherein the switchover channel selection control section switches a currently usable channel list if unable to perform channel selection at a time of startup with a channel selected at a time of a most recent termination.

**11.** The broadcast receiving apparatus according to claim 1, wherein the switchover channel selection control section switches a currently usable channel list if broadcast wave reception ceases to be possible during TV playback.

**12.** The broadcast receiving apparatus according to claim 9, wherein the switchover channel selection control section, when performing channel selection after switching a currently usable channel list to the second channel list, performs channel selection with a channel for which affiliate information indicating a same affiliate as a broadcasting station of a time when broadcast wave reception ceased to be possible during TV playback matches.

**13.** The broadcast receiving apparatus according to claim 9, wherein the switchover channel selection control section, when performing channel selection after switching a currently usable channel list to the second channel list, performs channel selection with a channel that broadcasts a same program based on program information included in the broadcast wave of a time when broadcast wave reception ceased to be possible during TV playback.

**14.** (Added) The broadcast receiving apparatus according to claim 1, wherein the switchover channel selection control section, when channel selection with a frequency channel in the second channel list is successful, and a broadcasting station corresponding to the second channel list and identification information obtained from a broadcast wave match, switches a current channel list to the second channel list.

**15.** (Added) The broadcast receiving apparatus according to claim 1, wherein the switchover channel selection control section performs channel selection with a frequency channel corresponding to a channel specified by input information specifying a channel using a currently usable first channel list, and if identification information of a broadcasting station obtained from a broadcast wave is not a broadcasting station corresponding to the first channel list, switches a currently usable channel list to another second channel list for which identification information of a broadcasting station obtained from a broadcast wave exists.
